Europäisches Patentamt

European Patent Office

Office européen des brevets

(19)

(11) Veröffentlichungsnummer: **0 058 842**
**B2**

(12) **NEUE EUROPÄISCHE PATENTSCHRIFT**

(45) Veröffentlichungstag der neuen Patentschrift:
**02.01.91**

(51) Int. Cl.⁵: **B 60 H 1/18,** F 01 P 5/08,
F 28 D 21/00

(21) Anmeldenummer: **82100693.9**

(22) Anmeldetag: **01.02.82**

(54) **Wärmetauscheranordnung mit Abgas eines Verbrennungsmotors als wärmeabgebendes Medium.**

(30) Priorität: **30.01.81 DE 3103199**

(43) Veröffentlichungstag der Anmeldung:
**01.09.82 Patentblatt 82/35**

(45) Bekanntmachung des Hinweises auf die
Patenterteilung:
**28.05.86 Patenblatt 86/22**

(45) Bekanntmachung des Hinweises auf die
Entscheidung u̇ber den Einspruch:
**02.01.91 Patentblatt 91/01**

(84) Benannte Vertragsstaaten:
**DE GB IT**

(56) Entgegenhaltungen:
| | |
|---|---|
| **EP-A-0 046 182** | **FR-A- 556 947** |
| **WO-A-80/02726** | **FR-A- 986 505** |
| **BE-A- 437 470** | **GB-A- 6 711** |
| **CH-A- 149 941** | **GB-A-1 181 234** |
| **DE-A-1 924 141** | **US-A-2 176 282** |
| **DE-A-2 800 966** | **US-A-2 258 324** |
| **DE-B-1 248 373** | **US-A-3 223 150** |
| **DE-C- 577 095** | **US-A-3 223 151** |
| **DE-U-7 617 655** | |

(73) Patentinhaber: **Schatz, Oskar, Dr.-Ing.**
**Waldpromenade 16**
**D-8035 Gauting (DE)**

(72) Erfinder: **Schatz, Oskar, Dr.-Ing.**
**Waldpromenade 16**
**D-8035 Gauting (DE)**

(74) Vertreter: **Lamprecht, Helmut, Dipl.-Ing.**
**Corneliusstrasse 42**
**D-8000 München 5 (DE)**

EP 0 058 842 B2

Courier Press, Leamington Spa, England.

**Beschreibung**

Die Erfindung betrift eine Wärmetauscheranordnung mit einem in den Strömungsweg des als wärmeabgebendes Medium dienenden Abgases eines Verbrennungsmotors einbezogenen Wärmetauscher. Insbesondere soll sich die Wärmetauscheranordnung für die Anwendung bei Kraftfahrzeugheizunden eignen.

Wegen des Rückgangs luftgekühlter PKW-Motoren ist die Nutzung der Abgaswärme für Zwecke der Beheizung des Fahrzeuginnenraums in den letzten Jahren stark zurückgegangen. Bei Verwendung wassergekühlter Motoren ist eine leichte Beheizung mit dem Kühlwasser möglich, jedoch wird im Zuge der Maßnahmen zur Senkung des Kraftstoffverbrauchs im Fahrzeugbau das Angebot an Kühlwärme des Motors immer geringer. Auf diese Weise entstehen bei besonders effizienten Motoren Heizungslücken, die durch die Einsatz von Zusatzheizungen behoben werden müssen.

Um die Wärmeabgabe des Motors, an das Kühlmittel zu steigern, ist es bekannt, die Abgase aufzustauen, wodurch sich jedoch der Kraftstoffverbrauch des Motors und die Temperatur der Abgase, wie auch die Emission von Giftstoffen erhöht. Die einzige noch realistische nutzbare Abwärmequelle zur Ausfüllung der beschriebenen Heizungslücken ist die Wärme der Abgase. Wird die Abgaswärme über einen Gas — Wasser — Wärmetauscher gewonnen und damit in das Heizund Kühlsystem des Fahrzeugs integriert, dann wird sogar noch eine positive Beeinflussung des Kraftstoffverbrauchs und der Abgasemission über die Anhebung des Temperaturniveaus des Motors möglich.

Einige der früher vorhandenen Probleme bei Abgaswärmetauschern, wie Wärmerisse durch thermiische Spannungen und Zersetzung des Frostschutzmittels hat man dadurch übenwunden, daß der Abgas — Wasser — Wärmetauscher im Bypass zum Abgassystem betrieben wird und nur dann mit Abgas beaufschlagt wird, wenn Wärmeleistung erforderlich ist. Dabei wird der Wärmetauscher ständig mit Wasser durchspült und auf diese Weise auf einer etwa konstanten Temperatur gehalten. Ein Wärmetauscher dieser Art ist in der US—A—3 223 151 beschrieben. Dabei wird beim Eintritt in den Wärmetaucher durch eine Verringerung des Strömungsquerschnitts motorseitig ein leistungs- und damit temperatursteigernder Stau erzeugt, während andererseits die den Wärmetauscher durchströmenden Abgase beschleunigt werden.

Das Kernproblem ist jedoch geblieben, nämlich die Abhängigkeit der nutzbaren Abwärme des Abgases von der Motorleistung, die ihrerseits in keiner Beziehung zum Wärmebedarf steht, der hauptsächlich von der Außentemperatur abhängig ist. Die nutzbare Abwärme schwankt bei Diesel- und bei Ottomotoren zwischen Höchstleistung und Leerlauf etwa im Verhältnis 200:1. Da die vom Kühlmittel des Motors abtransportierte Wärmemenge, die serienmäßig zur Beheizung des Innenraums zur Verfügung steht, ebenfalls von der Leistung des Motors abhängt, ist der Bedarf an zusätzlicher Heizleistung dort am höchsten, wo die nutzbare Abwärme im Abgas am geringsten ist. Dies führt zu relativ großflächigen und damit großvolumigen und schweren Wärmetauschern. Diese Tendenz läuft den Bestrebungen zur Senkung des Fahrzeuggewichts und der damit verbundenen Verringerung des zur Verfügung stehenden Platzes zuwider. Da andererseits bei geringer Motorleistung nicht nur die Abgasmengen gering sind, sondern auch die Abgastemperaturen, besteht der Wunsch, die Wärmestromdichte durch andere Maßnahmen zu erhöhen.

Eine wirksame Maßnahme ist die Erhöhung der Geschwindigkeit des Abgases entlang der vom Abgas bestrichenen Wärmetauscherfläche. Mit der Erhöhung der Strömungsgeschwindigkeit steigt die Wärmedurchgangszahl, auch k-Wert genannt, welche insbesondere bei Gasen eine Funktion der Strömungsgeschwindigkeit ist. Von diesem k-Wert hängen im hohen Maße Kosten, Bauvolumen und Gewicht eines Wärmetauschers ab.

Der Erhöhung der Gasgeschwindigkeit sind jedoch wirtschaftliche Grenzen gesetzt. Zur Erhöhung der Strömungsgeschwindigkeit werden die Strömungsquerschnitte verringert. Um die mit der höheren Strömungsgeschwindigkeit erforderliche höhere Druckdifferenz zu erbringen, müssen zur Förderung des Gases dienende Gebläse, sowie die Motoren zum Antrieb dieser Gebläse, entsprechend aufwendiger ausgelegt werden. Weiterhin steigen die Betriebskosten durch den höheren Energieverbrauch beträchtlich.

Beim Einsatz in Kraftfahrzeugen, insbesondere bei Personenkraftwagen, wiegen die Maßnahmen zur Erhöhung der Strömungsgeschwindigkeit bei Wärmetauschern besonders schwer. Durch die geräteseitigen Veränderungen werden Kosten, Gewicht und Bauvolumen negativ beeinflußt. Das Aufbringen der für den Betrieb der Wärmetauscher erforderlichen Gebläseenergie erfordert weitere Maßnahmen. Zunächst muß sichergestellt werden, daß die erforderliche Gebläseleistung dem Gebläsemotor zugeführt werden kann, hierzu wäre eine Verstärkung der Lichtmaschine erforderlich, was weitere Gewichtsnachteile und auch eine nachteilige Vergrößerung des Bauvolumens mit sich bringen würde. Der wichtigste Faktor bei dem Betrieb eines Gebläses mit höherer Druckleistung ist jedoch der besonders ungünstige Wirkungsgrad beim Aufbringen der erforderlichen Antriebsleistung. Zunächst muß die Druckenergie, die für eine Erhöhung der Durchflußgeschwindigkeiten erforderlich ist, um ein mehrfaches angehoben werden. Zudem sind die Wirkungsgrade im Kraftfahrzeug sehr ungünstig, weil mehrere Geräte mit schlechtem Wirkungsgrad multiplikativ miteinander verbunden sind. Die Kette besteht aus folgenden Gliedern:

höhere Druckenergie x schlechter Wirkungsgrad des Kreiselgebläses x schlechter Wirkungsgrad des Gebläsemotors x schlechter Wirkungsgrad der Lichtmaschine x schlechter Wirkungsgrad des Fahrzeugmotors.

Ein Teil der Verluste des Kraftfahrzeugmotors kann zwar für Heizungszwecke rückgewonnen werden, die Verluste bei Lichtmaschine, Gebläsemotor und Gebläse selbst sind jedoch in vollem Umfang zu berücksichtigen. Aus diesem Grunde wird es bisher für unwirtschaftlich angesehen, Wärmetauscher für Fahrzeuge mit hohen Geschwindigkeiten zu beaufschlagen. Daraus erwuchs die branchenübliche Norm, Wärmetauscher bei Kraftfahrzeugen mit einem möglichst niedrigen Druckverlust zu betreiben, d.h. mit einer möglichst niedrigen Strömungsgeschwindigkeit. Daraus ergeben sich branchenübliche Wärmedurchgangszahlen (k-Werte) zwischen 20-50 Watt/qm/Grad Kelvin.

Es ist bekannt, Abgaswärmetauscher von Kraftfahrzeugen mit Kolbenmotoren direkt mit dem Auspuffsystem des Motors zu verbinden, so daß die Verwendung eigener Gebläse überflüssig wird. Aufgrund der branchenüblichen Norm, Wärmetauscher mit niedrigem Druck und niedrigen Durchströmgeschwindigkeiten zu betreiben, werden auch diese Wärmetauscher konventionel ausgelegt. Dies ist, wie sich nachfolgend noch ergibt, die Folge eines unbegründeten Vorurteils. Es hat sich vielmehr gezeigt, daß die vorstehend beschriebenen Probleme überwindbar sind, wenn man Wärmetauscher einsetzt, bei welchen eine hohe Wärmestromdichte erzielt werden kann, und wenn man diese an die jeweilige Betriebssituation des Fahrzeugs anpaßt.

Der Erfindung liegt deshalb die Aufgabe zugrunde, die bedarfsgerechte Erhöhung bzw. Anpassung der Wärmestromdichte von Wärmetauschern, die von mindestens einem gasförmigen Medium mit hoher Geschwindigkeit durchströmt werden, auf wirtschaftliche Weise zu ermöglichen, d.h. unter Vermeidung eines kostenträchtigen Aufwands zur Erzeugung hoher Drücke und/oder hoher Durchströmgeschwindigkeiten, nämlich hinsichtlich der technischen Ausstattung, sowie des Energie-, Gewichts- und Raumbedarfs, Die Vermeidung eines hohen Gewichts- und Raumbedarfs soll insbesondere der Anwendung in Kraftfahrzeugen entgegenkommen.

Die Lösung der gestellten Aufgabe besteht bei der eingangs genannten Wärmetauscheranordnung darin, daß in dem den Strömungsweg des am Wärmetausch teilnehmenden Abgases Verstellmittel angeordnet sind, welche geeignet sind, dieses Abgas wahlweise mit niedriger bzw. höherer Geschwindigkeit entlang den Wärmetauscherflächen strömen zu lassen, ohne daß Abgases vom Strömungsweg durch den Wärmetauscher abgezweigt wird.

Beispielsweise aus der DE-B-12 48 373 ist ein Wärmetauscher bekannt, bei dem eine Regelung der Heizleistung immer mit einer Änderung des den Wärmetauscher durchquerenden Abgas-Volumenstroms verknüpft ist, während beim erfindungsgemäßen Wärmetauscher die Heizleistung ohne Änderung des Volumenstroms durch Änderung der Strömungsgeschwindigkeit im Wärmetauscher variiert wird.

Ein zusätzlicher Bedarf an Wärmeenergie besteht vor allem bei niedriger Motorbelastung. Durch die erfindungsgemäße Lösung wird erreicht, daß in Umkehrung der Verhältnisse beim konventionellen Wärmetauscher bei geringer Motorbelastung hohe Wärmestromdichten erreicht werden können und bei mittlerer Motorbelastung möglichst niedrige Wärmestromdichten.

Durch den Stau wird die Abgastemperatur erhöht, was sich am Abgaswärmetauscher vorteilhaft bemerkbar macht. Andererseits wird auch die Kühlwassertemperatur erhöht, was sich an der normalen Fahrzeugheizung Positiv auswirkt. Man erhält auch bei niedriger Motorleistung hohe Geschwindigkeiten der Abgase längs der Wärmetauscherflächen und durch Beseitigung des Staus niedrige Geschwindigkeiten bei hohen Motorleistungen. Die zur Verwirklichung höherer Geschwindigkeiten erforderliche Verdichterleistung wird von Motor selbst über den Rückstau der Gase geleistet, wie dies an sich, jedoch ohne die Möglichkeit der bedarfsgerechten Anpassung der Wärmestromdicht, aus der US—A—3 223 151 bekannt ist.

Durch die Stauung der Abgase bei niedriger Motorbelastung steigen Dichte und Temperatur der Abgase, was den Wärmeübergang zusätzlich fördert. Außerdem steigt die Wärmeabgabe an das Kühlmittel des Motors.

Abgaswärmetauscher konventioneller Bauart weisen den Nachteil auf, daß sie umso effektiver sind, je höher die Motorbelastung ist und je weniger sie deshalb gebraucht werden, und umso ineffizienter, je geringer die Motorbelastung ist, also je mehr sie gebraucht werden.

Bei einer Wärmetauscheranordnung mit einem zusätzliche, in einen Strömungsweg für ein Kühlmittel einbezogenen Wärmetauscher (Motorkühler), der einen strömungsweg für ein gasförmiges, der Kühlung des Kühlmittels dienendes Medium, z.B. Kühlluft, besitzt, also bei einer Anordnung, wie sie bei wassergekühlten Krafzfahrzeugmotoren anzutreffen ist, besteht eine vorteilhafte Ausgestaltung der Erfindung darin, daß dem genannten Wärmetauscher als Fördervorrichtung für das gasförmige Medium eine Strahlpumpe zugeordnet ist, deren Einlaß für das Treibmedium mit der Motorabgasleitung, deren Auslaß mit dem Einlaß für das gasförmige Medium des genannten Wärmetauschers und deren Saugstutzen mit einer Quelle für das gasförmige Medium verbunden ist, wobei der Saugstutzen vorzugsweise mit der Außenluft verbunden ist.

Die Verwending der Abfallenergie der Motorabgase zur Erhöhung der Wärmestromdichte an Wärmetauschern für die Fahrzeugheizung und an Wärmetauschern für die Kühlung des Verbrennungsmotors erweist sich insofern als besonders vorteilhaft, als bei niedriger Motorbelastung ein erhöhter Wärmebedarf für die Heizung besteht, während in diesem Betriebszustand eine Erhöhung der Wärmestromdichte am Kühler nicht erforderlich ist. Andererseits ist es bei hoher Motorbelastung wünschenswert, durch Erhöhung der Wärmestromdichte am Kühler die Kühlleistung zu verbessern, während bei diesem Betriebszustand ein Bedarf an zusätzlicher Heizenergie nicht besteht. Zwischen den beiden beschriebenen Betriebszuständen wird sich in der Regel noch ein mittlerer Betriebszustand befinden, bei welchem weder eine erhöhte Kühlnoch eine erhöhte Heizwirkung erforderlich ist.

Eine andere besonders zweckmäßige Ausgestaltung besteht darin, daß der den Wärmetauscher durchquerende Strömungsweg derart dimensioniert ist, daß sich zwischen Einlaß und Auslaß des Abgases am Wärmetauscher ein Druckunterschied von 0,01—0,5 bar ergibt und die Strömungsgeschwindigkeit in diesem Bereich 50—200 m/s beträgt.

Ein derartiger Wärmetauscher, der sich in seiner Dimensionierung von herkömmlichen Wärmetauschern unterscheidet, paßt die Wärmetauscheranordnung besonders an die Verwendung bei Kraftfahrzeugen an, weil es besonders für den Bereich mittlerer Motorbelastung ausgelegt ist, wo einerseits die Wärmeabgabe an das Kühlmittel des Motors nicht ausreicht um den Heizungsbedarf zu decken und wo andererseits die Abwärme im Abgas an sich ausreicht, um das bestehende Heizungsdefizit zu decken, so daß der Einsatz der Stauvorrichtung bei diesem Betriebszustand noch nicht erforderlich ist. Der gemäß den vorstehenden Angaben dimensionierte Wärmetauscher wirkt aufgrund der gegenüber herkömmlichen Wärmetauschern erhöhten Strömungsgeschwindigkeit sehr intensiv, so daß er nachfolgend als "Intensivwärmetauscher" bezeichnet wird. Die für den Betrieb des Intensivwärmetauschers erforderliche Druckerhöhung der Abgase erfordert keinerlei geräteseitige Veränderungen im Abgas- bzw. Motorsystem. Die Energie für die Verdichtung der Abgase wird vom Motor selbst geliefert. Durch die Verdichtung der Abgase ergibt sich zwar ein Mehraufwand an Kraftstoff im Motor, dieser ist jedoch gering, weil der Verdichterwirkungsgrad des Kolbenmotors sehr viel höher ist als der des Kreiselverdichters, weil der Elektromotor zum Antrieb eines Gebläses fehlt, weil infolgedessen auch die Beanspruchung der Lichtmaschine wegfällt und die Motorverluste ohnehin in nutzbare Wärme umgesetzt werden, ausgenommen ein Strahlungsverlust von ca. 10%. Der Kraftstoffverbrauch des Motors steigt also nur unwesentlich und ist sogar im Rahmen der Meßungenauigkeit vernachlässigbar. Geräteseitige Veränderungen im Abgas- bzw. Motorsystem sind nicht erforderlich.

Der Intensivwärmetauscher ist bei niedriger Motorbelastung einerseits durch die niedrige Temperatur der Abgase und andererseits durch die Reduzierung der Wärmedurchgangszahlen nahezu wirkungslos. Die Reduzierung des k-Wertes ergibt sich dabei dadurch, daß bei niedriger Motorbelastung die Abgasvolumen niedriger werden, wodurch die Durchströmungsgeschwindigkeit sinkt und dadurch bedingt wiederum der k-Wert. Aufgrund des niedrigen Durchflußwiderstandes ist allerdings auch kein Mehrverbrauch an Kraftstoff vorhanden. Bei hoher Motorbelastung sind die Verhältnisse genau umgekehrt. Hier sind die Abgasvolumina und die Temperaturen der Abgase wesentlich höher als bei mittlerer Belastung. Dadurch ergibt sich im Abgassystem ein sehr hohes Angebot von Wärme, gleichzeitig auch ein sehr hoher Wirkungsgrad des Wärmetauschers, infolge der hohen Durchflußgeschwindigkeiten, die dann noch durch Reibungseffekte ergänzt werden und durch die mit dem sich aus der höheren Geschwindigkeit ergebenden Abgasstau verbundene höhere Dichte der Abgase. Darüber hinaus fällt bei Betriebszuständen mit hoher Motorbelastung im Kühlmittel des Motors genügend Abwärme für die Beheizung des Fahrzeugs an, d.h. die Funktion des Abgaswärmetauschers ist hier nicht erforderlich. Wegen des sehr hohen Anfalls von Wärme im Intensivwärmetauscher bei hoher Motorbelastung müssen die Mittel vorgesehen sein, welche die Abgase unter Umgehung des Wärmetauschers abführen. Als Signal für diesen Betriebszustand kann bei Vergasermotoren die Stellung der Drosselklappe des Vergasers dienen und bei Einspritzmotoren die Stellung der Regelstange der Einspritzpumpe oder die Temperatur der Abgase.

Andererseits müßen wegen der Wirkungslosigkeit des Intensivwärmetauschers bei niedriger Motorbelastung die erfindungsgemäßen Verstellmittel eingesetzt werden. Obwohl sich also durch Einsatz des Intensivwärmetauschers die Verstellmittel nicht erübrigen, ergibt sich doch der Vorteil, daß der Intensivwärmetauscher gegenüber herkömmlichen Wärmetauschern wegen der sehr viel engeren Strömungsquerschnitte zur Erzielung der höheren Strömungsgeschwindigkeiten und damit der höheren Wärmedurchgangszahlen ein geringeres Bauvolumen und ein geringeres Gewicht aufweist, was günstige Rückwirkungen für den Kraftstoffverbrauch und die Gerätekosten zur Folge hat.

Die Verstellbare Stauvorrichtung kann an beliebiger Stelle des Strömungsweges für die Abgase angeordnet sein. Besonders zweckmäßige Ausgestaltungen der erfindungsgemäßen Wärmetauscheranordnung bestehen jedoch darin, daß die Stauvorrichtung im Wärmetauscherbereich vorgesehen ist, etwa in Form einer Düsenanordnung auf der Seite des Abgaseinlasses in den Wärmetauscher, deren Düsen derart gerichtet sind, daß der Abgasstrom gegen die Wärmetauscherfläche verläuft, wodurch sich eine wesentliche Erhöhung der Geschwindigkeit des Abgases entlang der Wärmetauscherwände und damit eine höhere Wärmestromdichte, sowie eine höher Gasdichte und eine höhere Abgastemperatur ergibt.

Eine andere Möglichkeit zur Erzeugung des Rückstaus besteht darin, den Strömungsquerschnitt für das Abgas im Wärmetauscher soweit einzuschränken, daß zwischen Einlaß und Auslaß ein Druckunterschied von 0,1—5 bar besteht und die Strömungsgeschwindigkeit in diesem Bereich 100—500 m/s beträgt. Bei dieser Wärmetauscherdimensionierung sind die Strömungsgeschwindigkeiten so hoch, daß ein beträchlicher Geschwindigkeitsgradient im strömenden Gas entsteht, wodurch die Reibung zu einer Verbesserung des Wärmedurchgangs führt. Außerdem werden durch die sehr hohen Strömungsgeschwindigkeiten relativ hohe Aufstauungen erzeugt, wodurch sich wiederum eine wesentliche Erhöhung der Temperatur des aus dem Motor kommenden Abgases ergibt. Außerdem steigt die Dichte der Abgase wesentlich, wodurch die Wärmedurchgangszahl erhöht wird. Die Wärmedurchgangszahl steigt etwa mit der 0,8ten Potenz der Dichte der Abgase. Wegen der inneren Reibung wird diese Wärmetauscherbauart nachfolgend noch als "Reibungswärmetauscher" bezeichnet. Hinsichtlich der Wärmestromdichte beim Reibungswärmetauscher wirken folgende Faktoren zusammen: hohe Temperaturdifferenz durch den Staueffekt, hohe Wärmedurchgangszahl durch die höhere Dichte, hohe Wärmedurchgangszahl durch die hohe Strömungsgeschwindigkeit entlang der Wärmetauscherfläche und hohe Temperaturentwicklung durch innere Reibung der Gase bzw. Reibung der Gase an den Wärmetauscherflächen.

Weitere vorteilhafte Ausgestaltungen der Erfindung ergeben sich aus den Unteransprüchen.

Anhand der nun folgenden Beschreibung einiger in der Zeichnung dargestellter Ausführungsbeispiele der erfindungsgemäßen Wärmetauscheranordnung wird die Erfindung näher erläutert.

Es zeigt:

Fig. 1 in schematischer Darstellung ein Fahrzeugheizungssystem mit Zsatzheizung und der erfindungsgemäßen Wärmetauscheranordnung,

Fig. 2 einen schematischen Schnitt durch eine erste Ausführungsform eines Wärmetauschers,

Fig. 3 einen schematischen Schnitt durch eine zweite Ausführungsform eines Wärmetauschers,

Fig. 4 einen schematischen Schnitt durch eine dritte Ausführungsform eines Wärmetauschers,

Fig. 5 eine Variante der dritten Ausführungsform nach Fig. 4,

Fig. 6 eine schematische Darstellung der Einbeziehung eines Wärmetauschers in den Strömungsweg des Abgases,

Fig. 7 einen Querschnitt durch ein für die beschriebenen Wärmetauscher besonders geeignetes Wärmetauscherrohr,

Fig. 8 eine vierte Ausführungsform eines Wärmetauschers und

Fig. 9 eine schematische Darstellung des Kühlsystems eines Verbrennungsmotors in Verbindung mit inem Abgaswärmetauscher für die Fahrzeugheizung und einer Beschleunigungsvorrichtung für das gasförmige, zur Kühlung des Kühlmediums dienende Strömungsmittel.

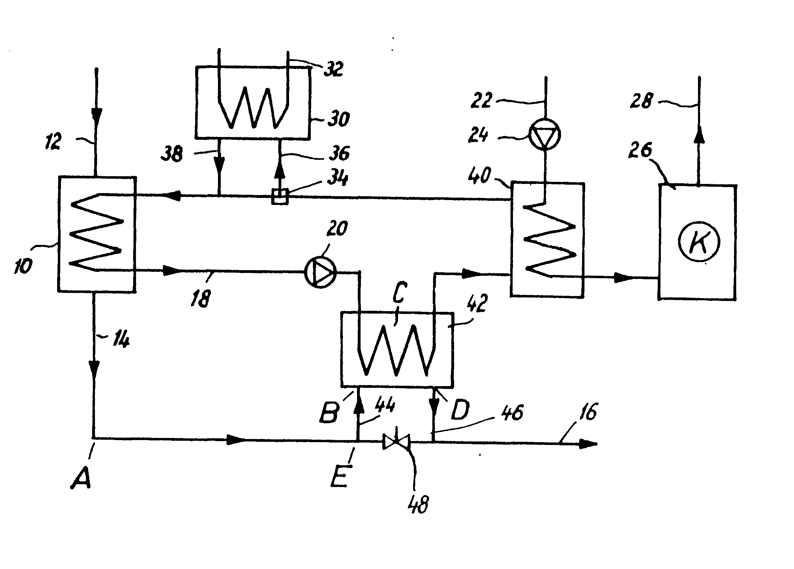

Die Fig. 1 ziegt ein Heizungssystem, welches es ermöglicht, den Wärmetauscher mit hoher Effizienz einzusetzen, um bei niedriger Motorleistung eine wesentliche Steigerung der Wärmestromdichte zu erhalten, wobei außerdem die Moglichkeit der Anpassung and die jeweiligen Betriebsverhältnisse und den Wärmebedarf besteht. Es wird in der folgenden Beschreibung angenommen, daß das Abgas die Wärmetauscherrohre inner durchströmt, während das wärmeaufnehmende Mittel die Rohre außen umfließt.

Bei hoher Motorleistung steht ausreichend Wärme für diese Zusatzheizung zur Verfügung. Bei niedriger Motorleistung wird durch Zuschaltung einer Stauvorrichtung an der Einmündung des Zuflusses 44 in den Abgaswärmetauscher 42, die schematisch durch B gekennzeichnet ist, die Abgastemperatur und auch die Temperatur des Kühlwassers erhöht, was über die beiden Wärmetauscher 40 und 42 der Fahrzeugheizung dienlich ist. Außerdem erhält man durch eine düsenartige, gegen die Wärmetauscherfläche gerichtete Ausbildung der Stauvorrichtung auch eine sich im Bereich des Wärmetauschers auswirkende Erhöhung der Abgasdichte und der Strömungsgeschwindigkeit der Abgase im Bereich des Wärmetauschers 42.

Es besteht auch die Möglichkeit, den Stau im Wärmetauscher 42 selbst zu erzeugen, indem die Wärmetauscherflächen durch geeignete Wahl von Länge und Querschnitt als Drossel verwendet werden. Eine solche Ausbildung ist in Fig. 1 schematisch durch C bezeichnet Man erhält wie beim Staupunkt B eine hohe Abgasgeschwindigkeit, eine hohe Temperatur und eine hohe Dichte des Abgases. Der wesentliche Vorteil liegt wie auch beim Staupunkt B darin, daß auf diese Weise die Wärmetauscherfläche frei von Ablagerungen, insbesondere von Ruß, gehalten werden kann.

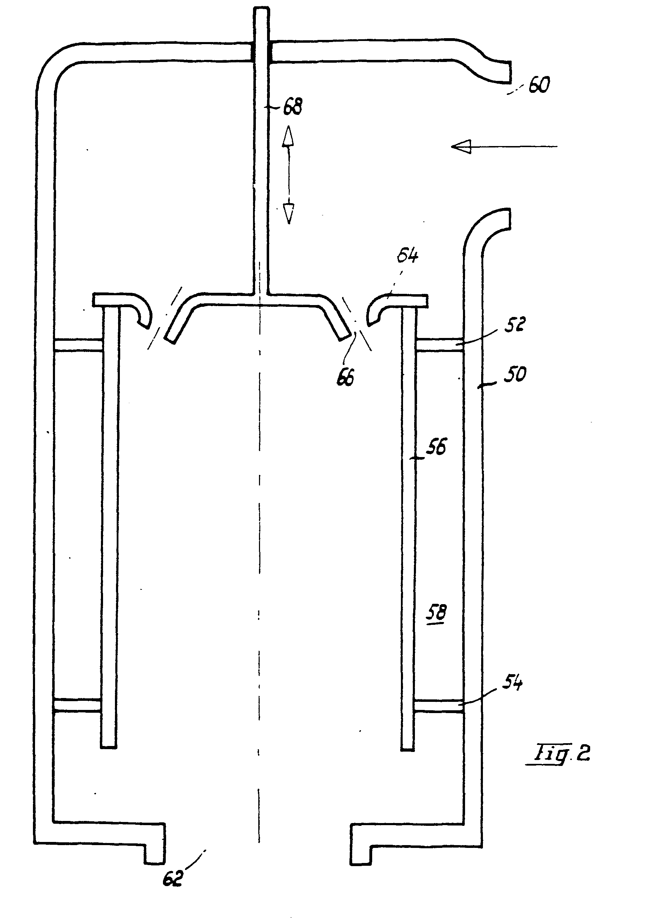

Die Fig. 2 zeigt eine Wärmetauscherkonstruktion für den Staupunkt B. Zur Vereinfachung der Darstellung ist eine Wärmetauscher mit nur einem Wärmetauscherrohr dargestellt, das Konstruktionsprinzip läßt sich jedoch—wie auch bei den nachfolgenden Beispielen—auf Konstruktionen mit einer Mehrzahl von Wärmetauschrohren oder auch auf eine beliebig geformte Wärmetauscherfläche ohne weiteres übertragen.

Der in Fig. 2 gezeigte Wärmetauscher besteht aus einem zylindrischen Mantel 50, in den ein durch Stege 52 und 54 getragenes Wärmetauscherrohr 56 konzentrisch eingebettet ist. Zwischen dem Mantel 50 und dem Wärmetauscherrohr 56 befindet sich ein Raum 56 für das Kühlwasser. Am einen Ende des Mantels 50 befindet sich ein Einlaßstutzen 60 und am anderen Ende ein Austrittsstutzen 62 für das motorabgas. An dem Wärmetauscher 56 befinden sich außerdem in dem Raum 58 mündende Anschlüsse für den Zu- und Ablauf des Kühlwassers.

Der Wärmetauscher 56 ist mit einem Düsenboden 64 mit zur Erzeugung eines Abgasstaus geeigneten Düsen 66 versehen, welcher auf der Einströmseite des Wärmetauscherrohrs 56 aufsitzt und über ein Betätigungsorgan 68 vom Wärmetauscherrohr 56 abgehoben werden kann.

Die Düsen 66 sind so angeordnet, daß der Strahl des Abgases bei auf dem Wärmetauscherrohr 56 aufsitzendem Düsenboden 64 die Wand des Wärmetauscherrohrs 56 optimal beaufschlagt. Dabei stellt sich in Abhängigkeit vom Gasvolumen und der Querschnittsfläche der Düsen 66 ein mehr oder weniger leichter oder starker Stau bei den Abgasen ein, der zur Düsenströmung führt. Der Stau bewirkt über die Düsen ein Ansteigen der Geschwindigkeit des Gases entlang der Wärmetauscherwände und damit eine höhere Wärmestromdichte, sowie eine höhere Gasdichte und eine höhere Temperatur. Bei stärkerem Aufstau treten diese Wirkungen spürbar in Erscheinung, dann ergibt sich allerdings auch eine merkbare Rückwirkung auf den Verbrauch des Motors, sowie eine vermehrte Wärmeabgabe an das Kühlwasser.

Im Inneren des Wärmetauscherrohrs 56 entsteht eine Rückströmung, wodurch erreicht wird, daß trotz des großen Innenquerschnitts des Wärmetauscherrohrs 56 hohe Gasgeschwindigkeiten verwirklicht werden, weil die Düsenströmung nur einen Teil des Raumes durchströmt, nämlich den wandnahen Bereich. Wird die Motorleistung erhöht, dann wird—vorzugsweise automatisch——der Düsenboden 64 angehoben, so daß die Abgase vom Eintrittsstutzen 60 direkt in das Wärmetauscherrohr 56 einmünden können und auf diese Weise das gesamte Rohr durchströmen. So kann erreicht werden, daß auslegungsbedingt bei mittlerer Motorleistung die Strömungsgeschwindigkeiten an dem Wärmetauscherrohr 56 kleiner sind als bei geringer Motorleistung, wo der Düsenboden 64 eingesetzt wird.

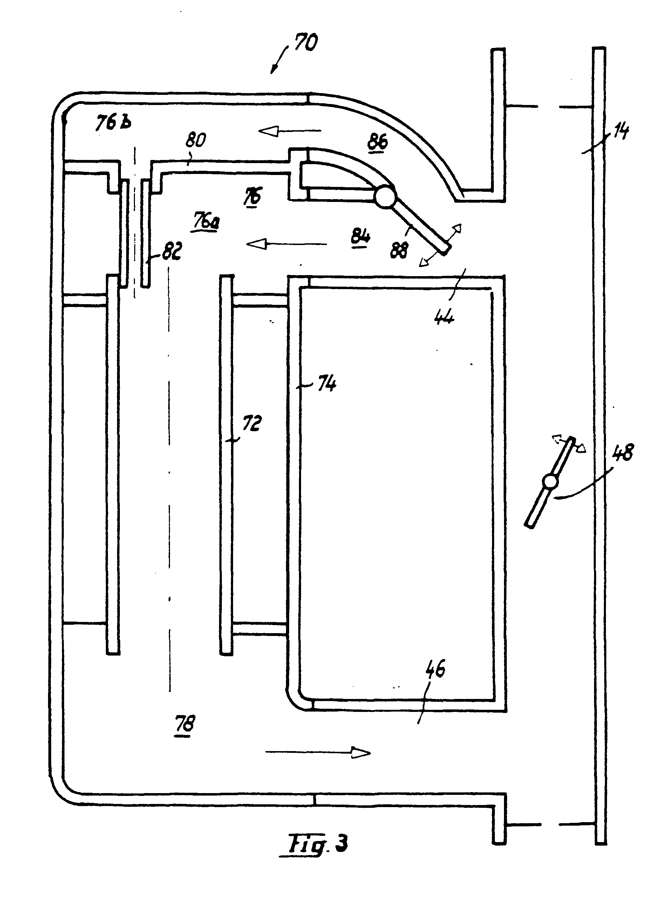

Die in Fig. 3 dargestellte Konstruktion stellt ein System dar, welches für den stufenlosen Übergang von Staubetrieb auf Normalbetrieb und umgekehrt geeignet ist. Wie in Fig. 2 ist ein Wärmetauscher 70 dargestellt, der eine einziges Wärmetauscherrohr 72 aufweist, welches konzentrisch zum Mantel 74 angeordnet ist und welches vom Kühlwasser umspült wird. Das Wärmetauscherrohr 72 mündet auf der Einströmseite in eine Einströmkammer 76 und auf der Ausströmseite in eine Ausströmkammer 78, an welche der Abfluß 46 angeschlossen ist.

Die Einströmkammer 76 wird in einem Abstand von dem in die Einströmkammer 76 mündenden Ende des Wärmetauscherrohrs 72 von einem Düsenboden 80 durchquert und durch diesen Düsenboden 80 in einen unmittelbar mit dem Wärmetauscherrohr 72 in Verbindung stehenden Kammerabschnitt 76a und in einen vom Wärmetauscherrohr 72 abgewandten, als Druckraum bezeichneten Kammerabschnitt 76b unterteilt. Vom Druckraum 76b aus kann über in den Düsenboden 80 eingesetzte Düsenrohr 82 eine Strömung in Richtung auf das Wärmetauscherrohr 72 erzeugt werden.

Der Zufluß 44 teilt sich vor dem Erreichen der Einströmkammer 76 in einen Zweig 84 mit großem Querschnitt und einen Zweig 86 mit kleinem Querschnitt, wobei der Zweig 84 mit großem Querschnitt in die Kammer 75a mündet, während der Zweig 86 mit kleinem Querschnitt in den Druckraum 76b ausmündet. An der Verzweigungsstelle ist eine Klappe 88 vorgesehen, welche den Zufluß des Abgases zum Wärmetauscher 70 auf die beiden Zweige 84 und 86 verteilt.

Verschließt die Klappe 88 den Zweig 84, so strömt die ganze Abgasmenge über den Druckraum 76 und das Düsenrohr 82 in das Wärmetauscherrohr 72 ein. Wird durch die Klappe 88 der Zweig 86 abgeschlossen, so gelangt die gesamte Abgasmenge über die Kammer 76a unmittelbar in das Wärmetauscherrohr. Es kann jede beliebige Zwischenstellung der Klappe 88 mit der entsprechenden Verteilung des Abgasstromes eingestellt werden.

Wenn die Klappe das Abgas über den Zweig 84 leitet, arbeitet der Wärmetauscher in konventioneller Weise, d.h., das Abgas wird mehr oder weniger gleichmäßig über den Querschnitt des Wärmetauscherrohrs 72 verteilt. Schließt die Klappe 88 dagegen den Zweig 84, so wird durch die Querschnittsverengungen des dann zur Verfügung stehenden Strömungsweges für das Abgas das Abgas angestaut und strömt mit erhöhter Geschwindigkeit in das Wärmetauscherrohr 72, wo es durch die Stellung der Düsenrohre 82 gegen die Wand gerichtet wird und so den erhöhten Wärmefluß bewirkt. Bei einer Zwischenstellung der Klappe 88 wird eine geringere Aufstauung des Abgases erreicht und eine geringere Blaswirkung der Düsenrohre 82. Der Rückstau und die Steigerung des Wärmedurchgangs ist ebenfalls geringer als bei reinem Druckbetrieb über den Druckraum 76b. Es wird jedoch auf diese Weise eine stufenlose Regelung des Wärmeangebots bei gerichtet möglicher Rückwirkung auf den Motor möglich.

Wegen der Düsen 66 bzw. 82 können die Wärmetauscher nach den Fig. 2 und 3 als "Dusenwärmetauscher" bezeichnet werden.

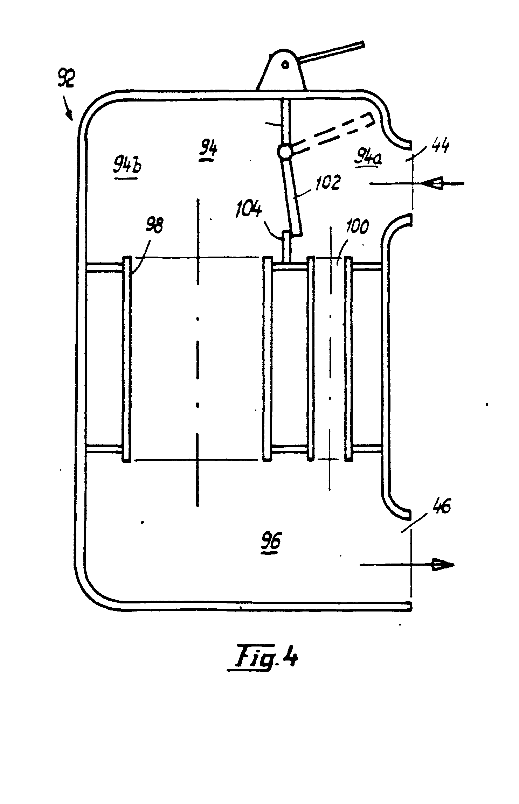

Die Fig. 4 zeigt einen Wärmetauscher 92 mit einer Einströmkammer 94 und einer Ausströmkammer 96, wobei sich zwischen den beiden Kammern 94 und 96 ein Wärmetauscherrohr 98 mit großen Querschnitt und ein Wärmetauscherrohr 100 mit dem gegenüber wesentlich kleinerem Querschnitt erstreckt. Die Einströmkammer wird durch eine mit einer verstellbaren Klappe 102 versehene Trennwand 104 in zwei Teilkammern 94a und 94b unterteilt und zwar derart, daß die dem Zufluß 44 benachbarte Teilkammer 94a unmittelbar mit dem Wärmetauscherrohr 100 mit geringem Querschnitt in Verbindung steht, während die Teilkammer 94b, welche mit dem Wärmetauscherrohr 98 mit großem Querschnitt verbunden ist, erst nach Öffnung der Klappe 102 über die Teilkammer 94a erreichbar ist.

Ist die Klappe 102 geöffnet, so stehen beide Wärmetauscherrohre 98 und 100 mit dem Zufluß 44 in Verbindung, wobei die mit geringer Geschwindigkeit stattfindende Strömung überwiegend über das Wärmetauscherrohr 98 stattfinden wird. Wird die Klappe 102 geschlossen, so erfolgt die Strömung zunehmend über das Wärmetauscherrohr 100 mit geringem Querschnitt, verbunden mit einer entsprechenden Stauwirkung und einer Erhöhung der Dichte und der Strömungsgeschwindigkeit des Abgases. Der Druckunterschied zwischen Zufluß 44 und Abfluß 46 beträgt bei diesem Betriebszustand als "Reibungswärmetauscher" 0,1—5 bar, die Strömungsgeschwindigkeit liegt bei 100—500 m/s.

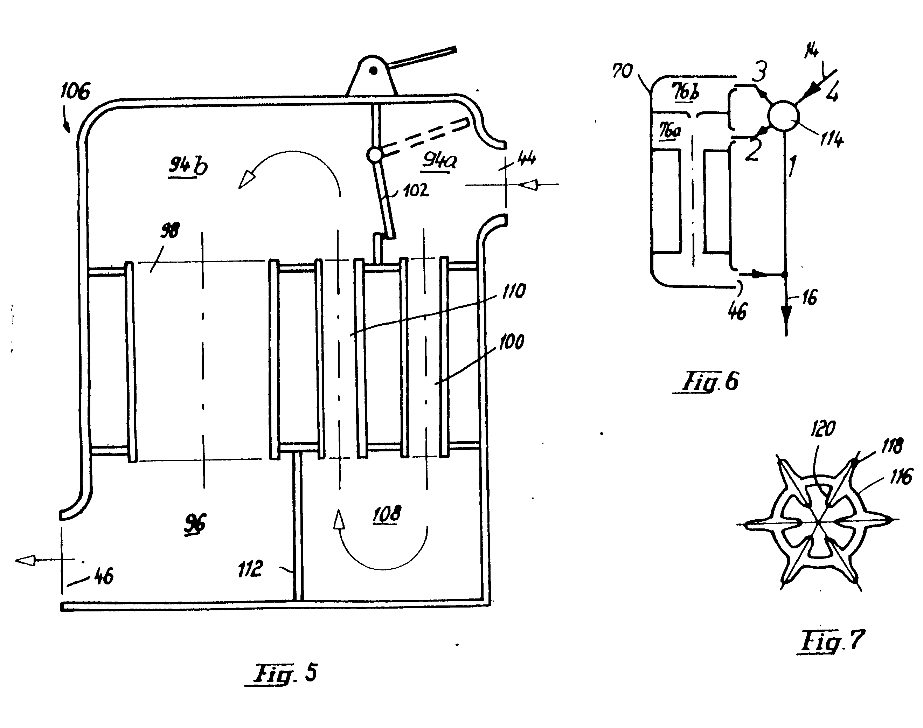

Die Fig. 5 zeigt einen Wärmetauscher 106, welcher ähnlich aufgebaut ist, wie der Wärmetauscher nach Fig. 4, bei welchem jedoch das Wärmetauscherrohr 100 mit kleinem Querschnitt in eine Zwischenkammer 108 mündet, aus welcher ein Wärmetauscherrohr 110, dessen Querschnitt dem des Wärmetauscherrohr 100 entspricht, in die Teilkammer 94b der Einströmkammer 94 führt. Die Zwischenkammer 108 wird mittels einer Wand 112 von der Ausströmkammer 96 abgetrennt. Diese Konstruktion hat den besonderen Vorteil, daß in Zeiträumen mit niedrigem Anfall nutzbarer Wärme eine besonders große Wärmetauscherfläche zur Verfügung gestellt wird.

Die Fig. 6 zeigt in einer der Fig. 1 entsprechenden schematischen Darstellung den Bereich des Strömungsweges 14, in welchem der Abgaswärmetauscher angeordnet ist, dabei ist ein Wärmetauscher 70 (Fig. 3) dargestellt.

Bei dieser Anordnung ist zur Kosteneinsparung ein Vierwegventil 114 gezeigt, welches in den Strömungsweg 14 einbezogen ist und drei Ausgänge 1, 2 und 3 sowie einen Eingang 4 besitzt. Der Eingang 4 wird mit dem Ausgang 1 verbunden, wenn die Zusatzheizung nicht in Betrieb ist. Andernfalls wird Ausgang 2 oder 3 mit dem Eingang 4 verbunden, entsprechend der gewünschten Wärmewirkung des Abgas-Wärmetauschers 70, und zwar erfolgt die Strömung über den Ausgang 2 solange eine geringe Wärmewirkung gewünscht ist.

Die vorstehend beschriebenen Klappensteuerungen können durch Bimetallklappen ersetzt werden, um eine Selbstregelung des Systems zu bewirken.

Der Schieber des Ventils 48 (Fig. 1) kann als Bimetallklappe ausgebildet werden, so daß er beim Überschreiten einer vorgegebenen Temperatur das Ventil öffnet und die Strömung durch den Wärmetauscher reduziert.

In Fig. 7 ist ein Querschnitt durch ein Wärmetauscherrohr 116 gezeigt, welche ringförmig mit nach innen und außen gerichteten rippenartigen Vorsprüngen 120 bzw. 118 versehen ist und welches dadurch eine besonders große Wärmetauscherfläche in Bezug auf den Querschnitt zur Verfügung stellt.

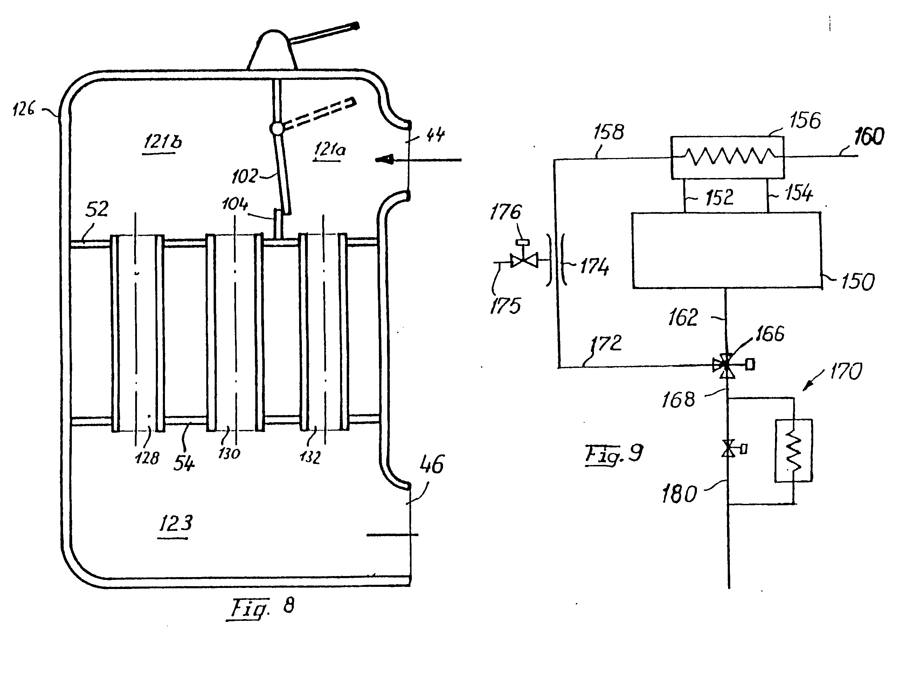

Die Fig. 8 zeigt einen Wärmetauscher 126 mit einem Zufluß 44 und einem Abfluß 46, wobei zwischen einer dem Zufluß 44 benachbarten Einströmkammer 121 und einer mit dem Abfluß 45 verbundenen Ausströmkammer 123 Wärmetauscherrohre 128, 130 und 132 verlaufen, die durch Stege 52 und 54 getragen werden. Der Querschnitt der Wärmetauscherrohre 128, 130, und 132 ist so bemessen, daß sich zwischen der Einströmkammer 121 und der Ausströmkammer 123 ein Druckunterschied von 0,01—0,5 bar und eine Strömungsgeschwindigkeit in diesem Bereich von 50—200 m/s ergint. Es handelt sich somit um den bereits erwähnten Intensivwärmetauscher, welcher bei relativ geringem Bauvolumen und relativ geringem Gewicht bei mittlerer Motorbelastung optimal wirksam wird.

Die Einströmkammer 121 ist durch eine mit einerm verstellbaren Klappe 102 versehene Trennwand 104 in zwei Teilkammern 121a und 121 bunterteilt.

Bei mittlerer Motorbelastung ist die Klappe 102 geöffnet, so daß sich der Abgasstrom auf sämtliche Wärmetauscherrohre 128, 130 und 132 verteilt. In diesem Falle wirkt der Wärmetauscher 26 als Intensivwärmetauscher. Beim Übergang auf niedrige Motorbelastung wird die Klappe 102 geschlossen, wodurch sämtliche Abgase allein das Wärmetauscherrohr 132 durchströmen können. Dadurch ergibt sich eine derart starke Verringerung des Strömungsquerschnittes, daß das Rohr 132 nun als Reibungswärmetauscher mit den oben bereits erwähnten Eigenschaften wirksam wird. Der technische und wirtschaftliche Vorteil dieses Wärmetauschers liegt darin, daß man für die mittlere Motorbelastung ohne meßbare Erhöhung des Kraftstoffverbrauchs des Motors eine sehr kompakte, kostengünstige Wärmetauscheranordnung zur Verfügung hat, daß durch eine einfache Vorrichtung auch bei Betriebszuständen mit niedriger Motorbelastung die erforderliche Heizleistung erbracht werden kann und daß durch Abschaltung des Wärmetauschers bei hoher Motorbelastung die unerwünschten Rückwirkungen einschließlich der Überhitzung des Wärmetauschers ausgeschaltet werden.

Bei den vorstehend beschriebenen Beispielen der einzelnen Wärmetauscherbauarten sind stets nur einige wenige Wärmetauscherrohre dargestellt, um das Konstruktionsprinzip möglichst einfach zu erläutern. In der Praxis kann sich die Anzahl der Wärmetasucherrohre stark verändern, beispielsweise kann ein Intensivwärmetauscher etwa 60 Rohre aufweisen, während ein Reibungswärmetauscher beispielsweise 6 Rohre doppelter Länge enthalten kann. So ist beispielsweise auch in Fig. 8 das Rohr 132 stellvertretend für eine Gruppe von Rohren zu verstehen, welche in ihrer Gesamtheit den für den Betrieb als Reibungswärmetauscher erforderlichen Strömungsquerschnitt zur Verfügung stellen.

Un eine starke Verunreinigung der Wärmetauscher zu verhindern, kann die Wärmetauscheranordnung mit einer Steuerung versehen sein, welche bei Betriebszuständen, die sehr rußintensiv sind, die Abgase unter Umgehung des Wärmetauschers ableitet.

Bei der Anordnung nach Fig. 9 ist ein Verbrennungsmotor 150 über Leitungen 152 und 154 mit einem Kühler 156 verbunden, wobei das Kühlmittel vom Motor über die Leitung 152 dem Kühler zugeführt und über die Leitung 154 wieder zum Motor zurückgeführt wird.

Die Motorabgasleitung 162 ist bis zu einem Dreiwegeventil 166 geführt, dessen einer Ausgang über eine Leitung 168 mit einem allgemein mit 170 bezeichneten erfinfungsgemässen Wärmetauschersystem für die Fahrzeugheizung verbunden ist, während der andere Ausgang über eine Leitung 172 mit einer Strahlpumpe 174 verbunden ist. Der Saugstutzen 175 der Strahlpumpe 174 ist mit der Außenluft verbunden, wobei gegebenenfalls noch ein Absperrventil 176 vorgesehen sein kann. Der Ausgang der Strahlpumpe 174 ist über die Leitung 158 an den Wärmetauscher 156 angeschlossen. Die Leitung 160 führt ins Freie. Das Wärmetauschersystem 170 besitzt eine wahlweise zuschaltbare Umgehungsleitung 180, so daß die Abgase des Motors 150 unter Umgehung des Wärmetauschers ins Freie abgeleitet werden können.

Bei der in Fig. 9 gezeigten Anordnung wird bei entsprechender Stellung des Dreiwegeventils 166 das Motorabgas entweder über die Wärmetauscheranordnung 170 ins Freie geleitet, oder aber bei Umschaltung des Dreiwegeventils 166 über die Strahlpumpe 174 dem Wärmetauscher 156 zugeleitet, wobei im Bereich der Strahlpumpe 174 Außenluft angesaugt und mit entsprechend hoher Geschwindigkeit dem Wärmetauscher 156 zugeführt wird.

Ist die Anordnung mit einem Absperrventil 176 am Saugstutzen 175 versehen, so kann bei niedriger Betriebstemperatur des Motors 150 das Ansaugen von Außenluft verhindert werden, so daß der Wärmetauscher 156 über die Leitung 158 nur mit Motorabgas versorgt wird, so daß sich das Kühlsystem rasch auf die erforderliche Betriebstemperatur bringen läßt. Sobald die gewünschte Betriebstemperatur erreicht ist, was durch einen Temperaturfühler ermittelt werden kann, wird das Absperrventil 176 geöffnet und Außenluft angesaugt.

Um bei hoher Motorbelastung und Betrieb einer Wärmetauscheranordnung mit Stauvorrichtung eine Überlastung des Motors zu vermeiden und um bei plötzlicher Beschleunigung eine möglichst große Motorleistung zur Verfügung zu haben, kann der Staudruck der Abgase vor einer Stauvorrichtung gemessen werden, um die Stauvorrichtung beim Überschreiten eines vorgegebenen Staudrucks abzuschalten, worauf dann die Stauvorrichtung erst wieder einsetzbar ist, wenn der durch sie erzeugte Staudruck zumindest nahezu völlig abgebaut ist. Es kann auch ein automatischer Druckbegrenzer zur Begrenzung des Staudrucks vorgesehen sein.

**Patentansprüche**

1. Wärmetauscheranordnung mit einem in den Strömungsweg (14) der als wärmeabgebendes Medium dienenden Abgases eines Verbrennungsmotors (10) einbezogenen Wärmetauscher (42; 70; 126), dadurch gekennzeichnet, daß in dem Strömungsweg des am Wärmetausch teilnehmenden Abgases Verstellmittel (64; 88; 102; 114) angeordnet sind, welche geeignet sind, dieses Abgas wahlweise mit niedriger bzw. höherer Geschwindigkeit entlang den Wärmetauscherflächen (56; 72; 98, 100; 110, 128, 130, 132) strömen zu lassen, ohne das durch die Verstellmittel (64; 88; 102; 114) ein Teil des Abgases vom Strömungsweg durch den Wärmetauscher (42; 70; 126) abgezweigt wird.

2. Wärmetauscheranordnung nach Anspruch 1, dadurch gekennzeichnet, daß die Verstellmittel aus einer zu- und abschaltbaren Stauvorrichtung (64; 82; 100; 110; 132) bestehen.

3. Wärmetauscheranordnung nach Anspruch 2, dadurch gekennzeichnet, daß der den Wärmetauscher (126) durchquerende Strömungsweg (128, 130, 132) derart dimensioniert ist, daß sich zwischen Einlaß (44) und Auslaß (46) des Abgases am Wärmetauscher (126) ein Druckunterschied von 0,01—0,5 bar ergibt und die Strömungsgeschwindigkeit in diesem Bereich 50—200 m/s beträgt.

4. Wärmetauscheranordnung nach einem der Ansprüche 1 bis 3, dadurch gekennzeichnet, daß die Verstellmittel (64; 88; 102) geeignet sind, den Strömungsweg des Abgases durch den Wärmetauscher (42; 70; 126) zu verändern.

5. Wärmetauscheranordnung nach einem der Ansprüche 2 oder 3, dadurch gekennzeichnet, daß ein erster (98; 128; 130) und ein zweiter (100, 110; 132) Abschnitt des Wärmetauschers parallel zueinander angeordnet und wahlweise in den Strömungsweg (14) des Abgases einschaltbar sind, von welchen der zwerite Abschnitt (100; 100, 110; 132) als Stauvorrichtung gestaltet ist.

6. Wärmetauscheranordnung nach Anspruch 5, dadurch gekennzeichnet, daß wahlweise beide Wärmetauscherabschnitte (98, 100, 110, 128, 130, 132) oder nur der als Stauvorrichtung gestaltete zweite Abschnitt (100; 100, 110; 132) in den Strömungsweg (14) des Abgases einschaltbar sind.

7. Wärmetauscheranordnung nach einem der Ansprüche 5 oder 6, dadurch gekennzeichnet, daß bei dem als Stauvorrichtung gestalteten zweiten Wärmetauschereabschnitt (100; 100, 110) der Strömungsweg für das Abgas derart dimensioniert ist, daß zwischen Abgaseinlaß (44) und Abgasauslaß (46) ein Druckunterschied von 0,1—5 bar besteht und die Strömungsgeschwindigkeit in diesem Bereich 100—500 m/s beträgt.

8. Wärmetauscheranordnung nach Anspruch 7, dadurch gekennzeichnet, daß beide Wärmetauscherabschnitte gemeinsam einen derart dimensionierten Strömungsweg für das Abgas bilden, daß sich wzischen Einlaß (44) und Auslaß (46) ein Druckunterschied von 0,01—0,5 bar und eine Strömungsgeschwindigkei in diesem Bereich von 50—200 m/s ergibt.

9. Wärmetauscheranordnung nach den Ansprüchen 2 und 4, dadurch gekennzeichnet, daß als Stauvorrichtung eine Düsenanordnung (66; 82) auf der Seite des Abgaseinlasses (44; 60) in den Wärmetauscher (42; 70) vorgesehen ist, deren Düsen derart gerichtet sind, daß der Abgasstrom gegen die Wärmetauscherfläche (56; 72) verläuft.

10. Wärmetauscheranordnung nach Anspruch 9, dadurch gekennzeichnet, daß die Düsenanordnung (66; 82) wahlweise in den Strömungsweg (14) des Abgases einschaltbar ist.

11. Wärmetauscheranordnung nach einem der Ansprüche 5 oder 6, dadurch gekennzeichnet, daß in den Strömungsweg (14) des Abgases ein Vierwegeventil (114) mit einem Einlaß (4) und drei Auslässen (1, 2, 3) einbezogen ist, wobei der erste Auslaß (1) den Wärmetauscher umgeht, der zweite Auslaß (2) das Abgas über den ersten oder den ersten und den zweiten Wärmetauscherabschnitt und der dritte Auslaß (3) das Abgas nur über den zweiten Wärmetauscherabschnitt leitet.

12. Wärmetauscheranordnung nach Anspruch 9, dadurch gekennzeichnet, daß in den Strömungsweg (14) des Abgases ein Vierwegeventil (114) mit einem Einlaß (4) für das Abgas und drei Auslässen (1, 2, 3)einbezogen ist, wobei der erste Auslaß (1) den Wärmetauscher (70) umgeht, der zweite Auslaß (2) das Abgas unmittelbar in den für das Angas vorgesehenen Strömungskanal (72) des Wärmetauschers (70) und der dritte Auslaß (3) das Abgas über die Düsenanordnung (82) in diesen Strömungskanal (72) leitet.

13. Wärmetauscheranordnung nach einem der vorhergehenden Ansprüche, dadurch gekennzeichnet, daß eine Steuerung vorgesehen ist, welche geeignet ist, bei sehr rußintensiven Betriebszuständen die Abgase unter Umgehung des Wärmetauschers abzuleiten.

14. Wärmetauscheranordnung nach Anspruch 6, dadurch gekennzeichnet, daß beide Wärmetauscherabschnitte (100, 110, 98) in Reihe schaltbar sind.

15. Wärmetauscheranordnung nach einem der Ansprüche 1 bis 9, dadurch gekennzeichnet, daß eine wahlweise zuschaltbare Drosselstelle (D) stromab vom Wärmetauscher (42) in dem über den Wärmetauscher führenden Zweig des Strömungswegs (14) angeordnet ist.

16. Wärmetauscheranordnung nach einem der vorhergehenden Ansprüche mit einem in einen Strömungsweg (152, 154) für ein Kühlmittel einbezogenen Wärmetauscher (156), der einen Strömungsweg (158, 160) für ein gasförmiges, der Kühlung des Kühlmittels dienendes Medium besitzt, dadurch gekennzeichnet, daß dem genannten Wärmetauscher (156) als Fördervorrichtung für das gasförmige Medium eine Strahlpumpe (164) zugeordnet ist, deren Einlaß für das Treibmedium mit der Motorabgasleitung (162), deren Auslaß mit dem Einlaß (158) für das gasförmige Medium des genannten Wärmetauschers (156) und deren Saugstutzen (175) mit einer Quelle für das gasförmige Medium verbunden ist.

17. Wärmetauscheranordnung nach Anspruch 16, dadurch gekennzeichnet, daß der Saugstutzen (175) mit der Außenluft verbindbar ist.

18. Wärmetauscheranordnung nach einem der Ansprüche 16 oder 17, dadurch gekennzeichnet, daß der Saugstutzen (175) absperrbar ist.

**Revendications**

1. Agencement d'un échangeur de chaleur comprenant un échangeur de chaleur (42, 70, 126) incorporé dans le canal de passage (14) du gaz d'échappement d'un moteur à combustion interne servant de fluide caloporteur, caractérisé en ce que dans le canal de passage du gaz prenant part à l'échange de chaleur sont incorporés des moyens de réglage (64, 88, 102, 114) qui sont aptes à faire s'écouler ce gaz, à volonté, à petite ou à grande vitesse, le long des surfaces (56; 72, 98, 100; 110, 128, 130, 132) de l'échangeur de chaleur, et ce sans qu'une partie du gaz d'échappement ne soit dérivée, par les moyens de réglage (64; 88; 102, 114), à partir du canal de passage à travers l'échangeur de chaleur (42, 70, 126).

2. Agencement d'un échangeur de chaleur selon la revendication 1, caractérisée en ce que les moyens de réglage sont constitués par un dispositif de retenue (64, 82, 100, 110, 132) pouvant être branché et déchanché.

3. Agencement d'un échangeur de chaleur selon la revendication 2, caractérisée en ce que le courant (128, 130, 132) qui traverse l'échangeur de chaleur (126) a une dimension telle qu'il existe une différence de pression de 0,01 à 0,5 bars entre l'orifice d'entée (44) et l'orifice de sortie (46) du gaz d'échappement de l'échangeur de chaleur (126) et que la vitesse du courant dans cette partie est de 50 à 200 m/s.

4. Agencement d'un échangeur de chaleur selon l'une des revendications 1 à 3, caractérisée en ce que les moyens de réglage (64, 88, 102) sont aptes à modifier le passage du courant du gaz d'échappement à travers l'échangeur de chaleur (42, 70, 126).

5. Agencement d'un échangeur de chaleur selon l'une des revendications 2 ou 3, caractérisée en ce qu'une première (98, 128, 130) et une seconde (100, 110, 132) section de l'échangeur de chaleur sont disposées parallèlement et placées au choix dans le passage de courant (14) du gaz d'échappement, la seconde section (100, 100, 110, 132) ayant la forme d'un dispositif de retenue.

6. Agencement d'un échangeur de chaleur selon la revendication 5, caractérisée en ce qu'on peut placer au choix, les deux sections de l'échangeur de chaleur (98, 100, 110, 128, 130, 132) ou uniquement la seconde section (100, 100, 110, 132) sous forme de dispositif de retenue, dans le courant (14) du gaz d'échappement.

7. Agencement d'un échangeur de chaleur selon l'une des revendications 5 ou 6, caractérisée en ce que dans la second section (100; 100, 110) de l'échangeur de chaleur sous forme de dispositif de retenue, le canal de passage du gaz d'échappement a une dimension telle qu'une différénce de pression de 0,1 à 5 bars existe entre l'orifice d'entrée (44) et l'orifice de sortie (46) et que la vitesse de passage dans cette partie soit de 100 à 500 m/s.

8. Agencement d'un échangeur de chaleur selon la revendication 7, caractérisée en ce que les deux sections de l'échangeur de chaleur forment ensemble un canal de passage du gaz d'échappement d'une dimension telle à obtenir entre l'orifice de sortie (46) une différence de pression de 0,01 à 0,05 bar et une vitesse de passage de 50 à 200 m/s dans cette partie.

9. Agencement d'un échangeur de chaleur selon les revendications 2 et 4, caractérisée en ce qu'il est prévu comme dispositif dispositif de retenue une ordonnance de tuyères (66, 82) dans l'échangeur de chaleur (42, 70) du côté de l'orifice d'entrée (44, 60), dont les tuyères sont orientées de telle manière que le courant du gaz d'échappement rencontre les faces de l'échangeur de chaleur (56, 72).

10. Agencement d'un échangeur de chaleur selon la revendication 9, caractérisée en ce que l'ordonnance de tuyères (66, 82) peut être placée facultativement dans le courant (14) du gaz d'échappement.

11. Agencement d'un échangeur de chaleur selon l'une des revendications 5 ou 6, caractérisée en ce que dans le courant (14) du gaz d'échappement est incluse une soupape àquatre voies (114) avec une entrée (4) et trois sorties (1, 2, 3), dans laquelle la première sortie (1) contourne l'échangeur de chaleur, la seconde (2) fait passer le gaz d'échappement par la première ou par la première et par la second section de l'échangeur de chaleur et que la troisième sortie (3) le fait passer uniquement par la seconde section de l'échangeur de chaleur.

12. Agencement d'un échangeur de chaleur selon la revendication 9, caractérisée en ce que, dans le courant (14) du gaz d'èchappement, est incluse une soupape àquatre voies (114) avec une entrée (4) pour le gaz d'échappement et trois sorties (1, 2, 3), la première sortie (1) contournant l'échangeur de chaleur (70), la deuxième sortie (2) faisant passer le gaz d'échappement immédiatement dans le canal (72) de l'échangeur de chaleur (70) prévu pour le gas d'échappement et la troisième sortie (3) faisant passer le gaz d'échappement par l'ordonnance de tuyères (82) dans le canal (72).

13. Agencement d'un échangeur de chaleur selon l'une des revendications précédentes, caractérisée en qu'il est prévu une commande apte à détourner les gaz d'échappement en contournant l'échangeur de chaleur lorsque la formation de suie est intense.

14. Agencement d'un échangeur de chaleur selon la revendication 6, caractérisée en ce qu'il est possible de mettre en série les deux sections (100, 110, 98) de l'échangeur de chaleur.

15. Agencement d'un échangeur de chaleur selon l'une des revendications 1 à 9, caractérisée en qu'on peut mettre en circuit facultativement un point d'étranglement (D) placé en aval de l'échangeur de chaleur (42) dans la branche du courant (14) conduisant au-dessu de l'échangeur de chaleur.

16. Agencement d'un échangeur de chaleur selon l'une des revendications précédentes avec un échangeur de chaleur (156) inclus dans un courant (152, 154) pour un produit réfrigerant et qui possède un passage (158, 160) pour un milieu gazeux servant au refroidissement du produit réfrigérant, caractérisée en ce qu'une pompe à jet (164) est attribuée au dit échangeur de chaleur (156) comme dispositif de circu)ation pour le milieu gazeux, l'entrée pour le milieu moteur étant reliée à la conduite du gaz d'èchappement du moteur (162), dont la sortie est reliée à l'entrée (15B) pour le milieu gazeux dudit échangeur de chaleur (156) et dont les tuyaux d'aspiration (175) sont reliés à une source pour le milieu gazeux.

17. Agencement d'un échangeur de chaleur selon la revendication 16, caractérisée en ce qu'on peut relier la tuyau d'aspiration (175) à l'air extérieur.

18. Agencement d'un échangeur de chaleur selon l'une des revendications 16 ou 17 caractérisée en ce que l'on peut fermer le tuyau d'aspiration (175).

**Claims**

1. A heat exchanger arrangement comprising a heat exchanger (42; 70; and 126) arranged in the flow path (14) of the exhaust gas serving as a heat releasing medium, of an IC engine (10), characterized in that in the flow path of the exhaust gas, taking part in the heat exchange, setting means (64; 88; 102; and 114) are arranged, which are adapted to cause flow of the said exhaust gas selectively at a lower or a higher speed over the heat exchange surfaces (56; 72; 98; 100; 110; 128; 130; and 132) without the setting means (64; 88; 102; and 114) splitting off a part of the exhaust gas from the flow path through the heat exchanger (42; 70; and 126).

2. The heat exchanger arrangement as claimed in claim 1 characterized in that the adjustment means consist of a barrier device (64; 82; 100; 110; and 132) able to be turned on and off.

3. The heat exchanger arrangement as claimed in claim 2 characterized in that the flow path (128, 130 and 132) extending through the heat exchanger (126) is so dimensioned that between the inlet (44) and the outlet (46) of the exhaust gas at the heat exchanger (126) there is a pressure difference of 0.01 to 0.5 bar and the velocity of flow in this part is between 50 and 200 m/s.

4. The heat exchange arrangement as claimed in any one of the claims 1 through 3 characterized in that the adjustment means (64; 88; and 102) are adapted to modify the flow path of the exhaust gas through the heat exchanger (42; 70; and 126).

5. The heat exchanger arrangement as claimed in claim 2 or claim 3 characterized in that are first section (98; 128; and 130) and a second section (100, 110; and 132) of the heat exchanger are placed in a parallel to each other and are able to be selectively placed in the flow path (14) for the exhaust gas, and the second section (100; 100, 110; and 132) is adapted for sue as a barrier means.

6. The heat exchanger as claimed in claim 5 characterized in that the two heat exchanger sections (98, 100, 110, 128, 130 and 132) or only the second section (100; 100, 110; and 132) designed as the barrier means are able to be selectively placed in the flow path (14) for the exhaust gas.

7. The heat exchanger arrangement as claimed in claim 5 or claim 6, characterized in that in the case of the second heat exchanger section (100; 100; and 110) designed as a barrier means the flow path for the exhaust gas is of such a size that between the exhaust gas inlet (44) and the exhaust gas outlet (46) there is a pressure differential of 0.1 to 5 bar and the flow velocity in this part amounts to between 100 and 500 m/s.

8. The heat exchanger arrangement as claimed in claim 7, characterized in that the two heat exchanger sections jointly define a flow path of such a size for the exhaust gas that between the inlet (44) and the outlet (46) there is a pressure differential of 0.01 and 0.5 bar and a flow velocity in this part of between 50 and 200 m/s.

9. The heat exchanger arrangement as claimed in claims 2 and 4 characterized in that the barrier means is in the form of a nozzle arrangement (66; and 82) on the side of the exhaust gas inlet (44; and 60) into the heat exchanger (42; and 70), the nozzles of which are so directed that the outflow is directed onto the heat exchange surface (56; and 72).

10. The heat exchanger arrangement as claimed in claim 9 characterized in that the nozzle arrangement (66; and 82) is able to be placed selectively in the flow path (14) of the exhaust gas.

11. The heat exchanger arrangement as claimed in claim 5 or claim 6 characterized by a four-way valve (114) placed in the flow path (14) for the exhaust gas and having an inlet (4) and three outlets (1, 2 and 3), and in that the first outlet (1) bypasses the heat exchanger, the second outlet (2) passes the exhaust gas via the first or via the first and the second heat exchanger section and the third outlet (3) passes the exhaust gas only via the second heat exchanger section.

12. The heat exchanger arrangement as claimed in claim 9 characterized by four-way valve (114) in the flow path (14) for the exhaust gas and having one inlet (4) for the exhaust gas and three outlets (1, 2 and 3), and in that the first outlet (1) bypasses the heat exchanger (70), the second outlet (2) passes the exhaust gas directly into the flow passage (72) of the heat exchanger (70) for the exhaust gas and the third outlet (3) passes the exhaust gas via the nozzle arrangement (82) into this flow passage (72).

13. The heat exchanger arrangement as claimed in any one of the preceding claims characterized by a controller which is adapted to cause the exhaust gases to bypass the heat exchanger in very sooty operating conditions.

14. The heat exchanger arrangement as claimed in claim 6 characterized in that the two heat exchangers (100, 110 and 98) are able to be circuited in series.

15. The heat exchanger arrangement as claimed in any one of the claims 1 through 9 characterized by a choke means (D), which is able to be selectively put in circuit, downstream from the heat exchanger (42) in a branch from the flow path (14) passing through the heat exchanger.

16. The heat exchanger arrangement as claimed in any one of the preceding claims comprising a heat exchanger (156), incorporated in a flow path (152 and 154) for a coolant, and which has a flow path (158 and 160) for a gaseous medium serving for cooling the coolant characterized by a jet pump (164) associated with the said heat exchanger (156) as a pumping means for the gaseous medium, and in that the inlet of the pump for the driving medium is connected with the engine exhaust pipe (162), its outlet is connected with the inlet (158) for the gaseous medium of the said heat exchanger (156) and its intake pipe (175) is connected with the source of the gaseous medium.

17. The heat exchanger arrangement as claimed in claim 16 characterized in that the intake pipe (175) is able to be connected with the outside air.

18. The heat exchanger as claimed in claim 16 or claim 17 characterized in that the intake pipe (175) is able to be shut off.

*Fig.* 2

_Fig. 3_

3

*Fig.*4

*Fig.* 5

*Fig.* 6

*Fig.* 7

EP 0 058 842 B2

Fig. 8

Fig. 9

EP 0 058 842 B2